## Europäisches Patentamt

## European Patent Office

## Office européen des brevets

(19)

(11) Veröffentlichungsnummer: **0 202 429**

**A2**

(12)

# EUROPÄISCHE PATENTANMELDUNG

(21) Anmeldenummer: **86103961.8**

(22) Anmeldetag: **22.03.86**

(51) Int. Cl.⁴: **G 11 B 15/29**
**G 11 B 15/665**

(30) Priorität: **17.05.85 DE 3517738**

(43) Veröffentlichungstag der Anmeldung:
**26.11.86 Patentblatt 86/48**

(84) Benannte Vertragsstaaten:
**CH DE FR GB IT LI**

(71) Anmelder: **GRUNDIG E.M.V. Elektro-Mechanische Versuchsanstalt Max Grundig holländ. Stiftung & Co. KG.**
**Kurgartenstrasse 37**
**D-8510 Fürth(DE)**

(72) Erfinder: **Bratenstein, Ernst**
**Taubenweg 26**
**D-8510 Fürth/Bay(DE)**

(72) Erfinder: **Zöllner, Rainer**
**Birkenweg 4**
**D-8501 Dietenhofen(DE)**

(54) Vorrichtung zur betätigung einer bandandruckrolle in einem video-Magnetbandgerät.

(57) Es wird eine Vorrichtung zur Betätigung einer Bandandruckrolle in einem Video-Magnetbandgerät beschrieben, bei der die Bandandruckrolle über eine bestimmte Hebelanordnung bewegbar ist, und die Hebelanordnung in Eingriff zu einem ringförmigen Träger steht. Der ringförmige Träger weist Bandführungselemente auf und ist drehbar um eine Kopftrommel angeordnet. Durch eine Teildrehung des ringförmigen Trägers wird die Bandandruckrolle an die Capstan-Welle angedrückt und gleichzeitig in dieser Lage gesperrt.

./...

FIG. 1

- 4 -
1

# VORRICHTUNG ZUR BETÄTIGUNG EINER BANDANDRUCKROLLE IN EINEM VIDEO-MAGNETBANDGERÄT

## BESCHREIBUNG

Es sind Verfahren zur Ermittlung der abgelaufenen Spielzeit bzw. Restlaufzeit von Kassetten in Videogeräten bekannt, bei denen die Drehwinkelabhängigkeit der Aufwickelspule zur Abwickelspule in Beziehung gesetzt werden. Ein anderes Verfahren vergleicht die drehwinkelabhängig ermittelten Impulse einer Bandwickelspule mit den drehwinkelabhängigen Impulsen aus dem Antrieb des Magnetbandes über die Capstan-Welle. Das letztgenannte Verfahren ermöglicht eine besonders genaue Anzeige der noch zu erwartenden Spieldauer eines Gerätes. Ein derartiges Verfahren erfordert jedoch einen kurzen Testlauf zur Ermittlung der Vergleichsimpulse. Hierbei ist es bei einer bestimmten Ausführung erforderlich, daß das Band an die Capstan-

- 5 -

Welle angedrückt wird. Ein weitergehender Bandtransport zum Umschlingen der Kopftrommel ist für einen
derartigen Band-Testlauf nicht erforderlich und auch
nicht erwünscht, da der Testlauf in einer möglichst
kurzen Gerätebetriebszeit abgeschlossen sein soll.

Aufgabe der Erfindung ist es daher, eine Vorrichtung
für ein Video-Magnetbandgerät zu schaffen, die es
ermöglicht, daß nur durch ein teilweises Herausziehen
des Magnetbandes aus einer Bandkassette ein Bandtransport mittels einer Capstan-Welle möglich ist,
ohne das Magnetband um die Kopftrommel zu legen, wobei die Andruckrolle jedoch von einem ringförmigen
Träger, der die wesentlichsten Bandführungselemente
aufweist, gesteuert wird.

Diese Aufgabe wird erfindungsgemäß durch die im kennzeichnenden Teil des Patentanspruchs 1 angegebenen
Merkmale gelöst.

Ein Ausführungsbeispiel der erfindungsgemäßen Vorrichtung ist in den Zeichnungen näher erläutert. Es zeigen:

Fig. 1    eine vereinfachte perspektivische
          Darstellung einer Vorrichtung zur
          Betätigung einer Bandandruckrolle
          in einem Video-Magnetbandgerät
          gemäß der Erfindung und

Fig. 2     ist eine schematische Draufsicht
auf ein Videogerät mit den in einer
Ebene dargestellten Teilen nach
Fig. 1.

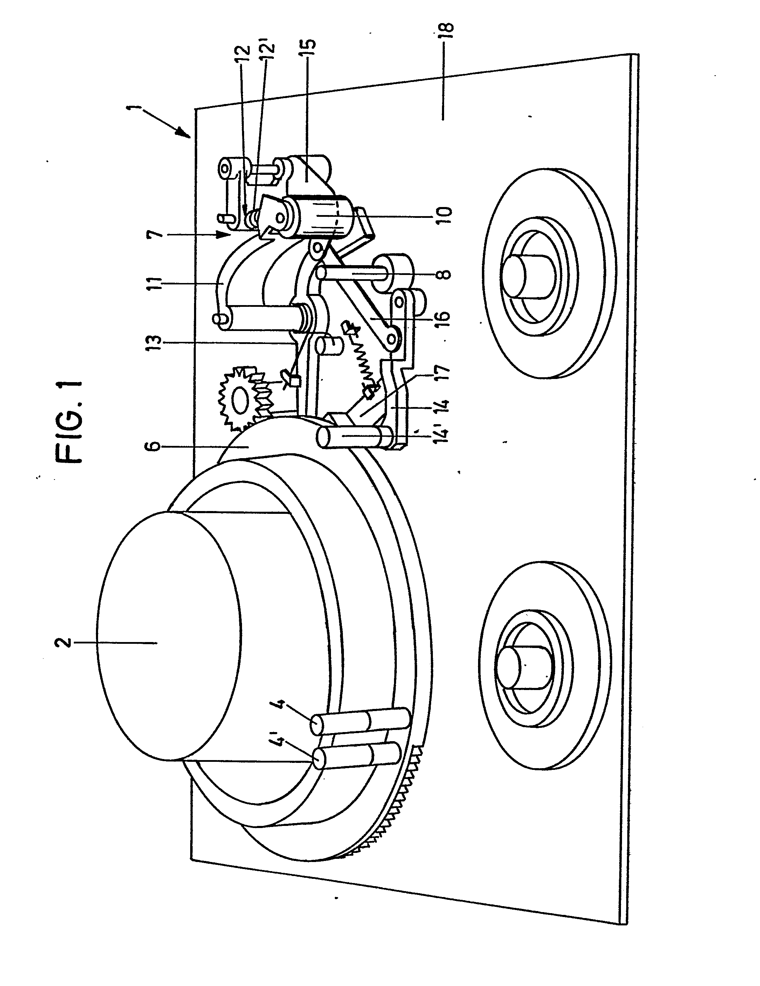

Die Figur 1 zeigt in vereinfachter Weise ein Video-Magnetbandgerät 1. Das Gerät besteht im wesentlichen aus einer Kopftrommel 2, eine nicht in der Figur eingezeichnete Bandkassette mit Magnetband sowie einen ringförmigen Träger 6 mit zugeordneten Bandführungselementen 4 und 4' und einer Hebelanordnung 7 zur Betätigung einer Band-Andruckrolle 10. Die Hebelanordnung 7 besteht hierbei im wesentlichen aus einem die Andruckrolle 10 tragenden Gabelhebel 11, einem dem Gabelhebel zugeordneten Kniegelenk 12 mit eingesetzter Druckfeder 12', sowie einem Steuerhebel 13 und einem Verbindungshebel 15. Ein weiterer Bandführungshebel 14 ist auf dem Gerätechassis 18 drehbar gelagert und trägt eine Bandführungsrolle 14'. Mittels eines zusätzlichen Verbindunghebels 16 ist der Bandführungshebel 14 in Eingriff zum Steuerhebel 13 gebracht. Der Steuerhebel 13 ist durch den ringförmigen Träger 6 steuerbar und sorgt so für das Anschwenken der Andruckrolle 10 an die Capstan-Welle 8. Nach dem Anschwenken der Andruckrolle wird die Hebelanordnung durch einen Sperrschieber 17 gesperrt.

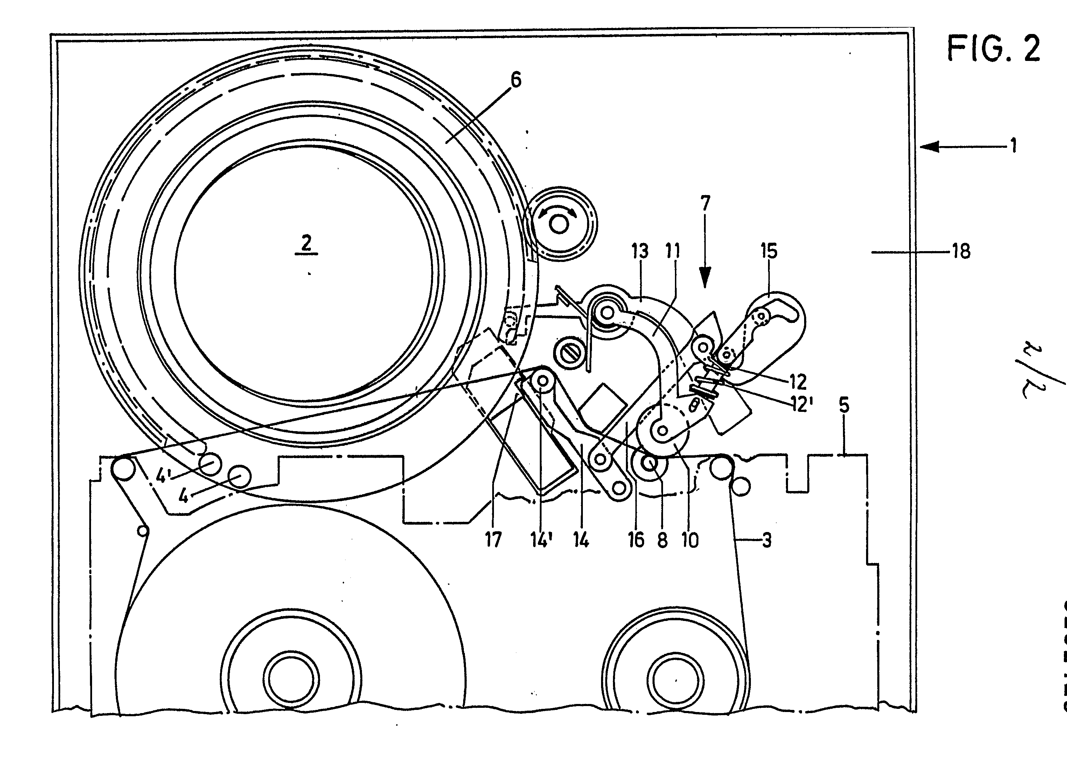

Aus der Figur 2 ist in einer einfach dargestellten
Schema-Zeichnung als Draufsicht die Hebelanordnung 7
in der Lage gezeichnet, in der die Band-Andruckrolle
10 an die Capstan-Welle 8 angeschwenkt ist. Zwischen
Capstan-Welle und Andruckrolle befindet sich das
Magnetband 3, das aus einer nicht näher dargestellten Band-Kassette teilweise herausgezogen ist.
Für das Anschwenken der Andruckrolle an die Capstan-
Welle kommt der Steuerschieber 13 in Eingriff zu dem
ringförmigen Träger 6 und wird während einer gesteuerten Teildrehung des Trägers 6 von diesem mitgenommen.
Diese Schwenkbewegung wird über den Verbindungshebel
15 auf das Kniegelenk 12 übertragen und hierdurch wird
weiterhin der Gabelhebel 11 mit der Andruckrolle 10
an die Capstan-Welle 8 angedrückt. Durch eine entsprechende Ausbildung des Eingriffs zwischen Verbindungshebel 15 und Kniegelenk 12 wird nach Anlage der
Andruckrolle an die Capstan-Welle ein erheblicher
Druck mittels des eingesetzten Kniegelenkes auf die
Andruckrolle ausgeübt. Nach Anlage der Andruckrolle
an die Capstan-Welle wird die Hebelanordnung 7 durch
den vom ringförmigen Träger gesteuerten Sperrschieber 17 derart gesperrt, daß der Steuerhebel 13 und
der Sperrschieber 17 weitgehend druckfrei an den
ringförmigen Träger 6 anliegen.
Der ringförmige Träger kann somit anschließend den
Bandführungsvorgang ohne zusätzliche Belastung fortführen oder durch Drehrichtungsänderung ohne einen vollständigen Bandeinfädelvorgang durchzuführen
nach einem Bandmeßlauf das Band in die Kassette zurückführen.

0202429

VORRICHTUNG ZUR BETÄTIGUNG EINER BANDANDRUCKROLLE IN
EINEM VIDEO-MAGNETBANDGERÄT

PATENTANSPRÜCHE

1. Vorrichtung zur Betätigung einer Bandandruckrolle in einem Video-Magnetbandgerät, das eine drehbare Kopftrommel mit zugeordneten Magnetköpfen aufweist, wobei das Magnetband mittels Bandführungselementen aus einer Bandkassette herausgezogen in
Schrägspurführung teilweise um die Kopftrommel gelegt
wird, und die Bandführungselemente auf wenigstens
einen drehbaren, die Kopftrommel umgebenden ringförmigen Träger angeordnet sind, d a d u r c h  g e -
k e n n z e i c h n e t ,  daß in den Träger eine
Hebelanordnung (7) derart eingreift, daß durch eine
gesteuerte Teildrehung des ringförmigen Trägers (6)
das Magnetband (3) nur zur Anlage an eine Capstan-
Welle (8) mittels einer Bandführungsrolle (14') aus
der Kassette (5) herausgezogen und gleichzeitig die
Andruckrolle (10) an die Capstan-Welle angeschwenkt
und in dieser Lage gesperrt wird.

2. Vorrichtung nach Anspruch 1, d a d u r c h g e k e n n z e i c h n e t , daß nach Sperren der für das Verschwenken der Andruckrolle (10) vorgesehenen Hebelanordnung (7) sich der Träger (6) belastungsfrei zur Führung des Magnetbandes (3) um die Kopftrommel (2) weiterdreht, oder durch Drehrichtungsänderung des Trägers die Sperre der Hebelanordnung aufgehoben wird.

3. Vorrichtung nach den Ansprüchen 1 und 2, d a d u r c h g e k e n n z e i c h n e t , daß nach Sperren der Hebelanordnung (7) das Magnetband im Sinne eines Bandmeßlaufs über die Capstan-Welle (8) kurzzeitig antreibbar ist.

4. Vorrichtung nach einem der bisherigen Ansprüche, d a d u r c h g e k e n n z e i c h n e t, daß die Bandführungsrolle (14') auf einem Bandführungshebel (14) angeordnet ist, und daß der Hebel (14) in Eingriff zur vom Träger (6) betätigten Hebelanordnung (7) steht.

5. Vorrichtung nach einem der bisherigen Ansprüche, d a d u r c h g e k e n n z e i c h n e t, daß die Hebelanordnung (7) aus einem Gabelhebel (11) mit Andruckrolle (10) und Kniegelenk (12), einem

- 3 -

Steuerhebel (13), einem Bandführungshebel (14) sowie zweier Verbindungshebel (15, 16) und einem Sperrschieber (17) besteht.

# FIG. 1

0202429

**FIG. 2**